(19) **Europäisches Patentamt**
**European Patent Office**
**Office européen des brevets**

(11) **EP 4 749 993 A1**

(12) **EUROPEAN PATENT APPLICATION**
published in accordance with Art. 153(4) EPC

(43) Date of publication:
**27.05.2026 Bulletin 2026/22**

(21) Application number: **23952348.3**

(22) Date of filing: **14.09.2023**

(51) International Patent Classification (IPC):
**H04L 9/32** $^{(2006.01)}$        **H04L 9/00** $^{(2022.01)}$

(52) Cooperative Patent Classification (CPC):
**H04L 9/00; H04L 9/32**

(86) International application number:
**PCT/KR2023/013853**

(87) International publication number:
**WO 2025/058108 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **LG Electronics Inc.**
**Yeongdeungpo-gu**
**Seoul 07336 (KR)**

(72) Inventors:
• **PARC, Juan**
  **Seoul 06772 (KR)**
• **HONG, Seungbum**
  **Seoul 06772 (KR)**
• **JO, Ikchan**
  **Seoul 06772 (KR)**

(74) Representative: **Vossius & Partner**
**Patentanwälte Rechtsanwälte mbB**
**Siebertstraße 3**
**81675 München (DE)**

(54)    **USER DEVICE AND OPERATING METHOD THEREOF**

(57)    A user device according to an embodiment of the present disclosure includes a communication circuit that communicates with a blockchain network, and a processor that receives, from the blockchain network, a link of pre-change metadata of a Dynamic Non-Fungible Token (DNFT) and a previous hash value, and a first hash value calculated based on the link of the pre-change metadata, calculates a second hash value using the link of the pre-change metadata, compares the first hash value and the second hash value, and determines whether the metadata of the DNFT has been manipulated according to a comparison result.

## FIG. 1

EP 4 749 993 A1

**Description**

[Technical Field]

The present disclosure relates to a method for detecting manipulation of metadata of dynamic non-fungible tokens.

[Background Art]

A Non-Fungible Token (NFT) is a virtual token that proves ownership of an asset using blockchain technology.
Metadata may be mapped to an NFT. The metadata may include one or more of asset properties, an owner's address of the asset, and a price of the asset. The metadata may include overall information about the asset.
Currently, the content of metadata that an NFT can express is limited.
While the meaning of NFT refers to an immutable token, recent use cases show that updates to metadata, which substantially contains value information of the NFT, frequently occur.
A Dynamic NFT (DNFT) is an NFT whose metadata can be changed.
That is, a dynamic NFT is an NFT whose metadata can be updated according to external conditions.
However, an issue is raised as to whether freely changing the metadata of an NFT is consistent with the purpose of NFTs representing digital assets in terms of reliability.
Additionally, a reliability problem of DNFTs still exists due to the possibility of manipulation by an Updater that updates metadata (falsely indicating a metadata link before change).

[Disclosure]

[Technical Problem]

An object of the present disclosure is to secure the reliability of DNFTs by enabling viewers to track/query previous change history and content even when DNFT metadata is changed.
Another object of the present disclosure is to detect manipulation of metadata of DNFTs.

[Technical Solution]

A user device according to an embodiment of the present disclosure may include a communication circuit that communicates with a blockchain network, and a processor that receives a link of pre-change metadata of a Dynamic Non-Fungible Token (DNFT) and a previous hash value from the blockchain network, and a first hash value calculated based on the link of the pre-change metadata, calculates a second hash value using the link of the pre-change metadata, compares the first hash value and the second hash value, and determines whether the metadata of the DNFT has been manipulated according to a comparison result.
An operating method of a user device according to an embodiment of the present disclosure may include receiving a link of pre-change metadata of a Dynamic Non-Fungible Token (DNFT) and a previous hash value from a blockchain network, and a first hash value calculated based on the link of the pre-change metadata, calculating a second hash value using the link of the pre-change metadata, comparing the first hash value and the second hash value, and determining whether the metadata of the DNFT has been manipulated according to a comparison result.

[Advantageous Effect]

According to an embodiment of the present disclosure, the change history of a DNFT can be tracked and the integrity of the change history of the DNFT can be verified using only the metadata of the DNFT, without querying on a block explorer or blockchain.

[Description of Drawings]

FIG. 1 is a block diagram illustrating the configuration of a user device according to an embodiment of the present disclosure.

FIG. 2 is a block diagram for explaining the configuration of a management server according to an embodiment of the present disclosure.

FIG. 3 is a ladder diagram for explaining an operating method of a blockchain system according to an embodiment of the present disclosure.

FIG. 4a is a diagram showing a change process of unmanipulated metadata of a DNFT, and FIGS. 4b to 4d are diagrams showing examples in which metadata of a DNFT has been manipulated.

FIG. 5 is a diagram explaining an actual example in which a viewer of a user device verifies the integrity of metadata of a DNFT according to an embodiment of the present disclosure.

[Best Mode]

Hereinafter, embodiments related to the present invention will be described in more detail with reference to the drawings. The suffixes "module" and "unit" for components used in the following description are given or used interchangeably only for ease of specification preparation, and do not have meanings or roles that are distinguished from each other.

A user device according to an embodiment of the present invention may be, for example, an intelligent user device in which a computer support function is added to a broadcast receiving function.

The user device may be equipped with an interface that is more convenient to use, such as a handwriting input device, a touch screen, or a spatial remote control, by adding an Internet function while being faithful to the broadcast receiving function.

The user device may be connected to the Internet and a computer with support of wired or wireless Internet functions, and may also perform functions such as email, web browsing, banking, or gaming.

The user device described in the present disclosure may perform various user-friendly functions because, for example, various applications can be freely added or deleted on a general-purpose OS kernel.

The user device may be any one of a smartphone, a smart pad, a notebook, a PC, a network TV, a smart TV, an LED TV, and an OLED TV.

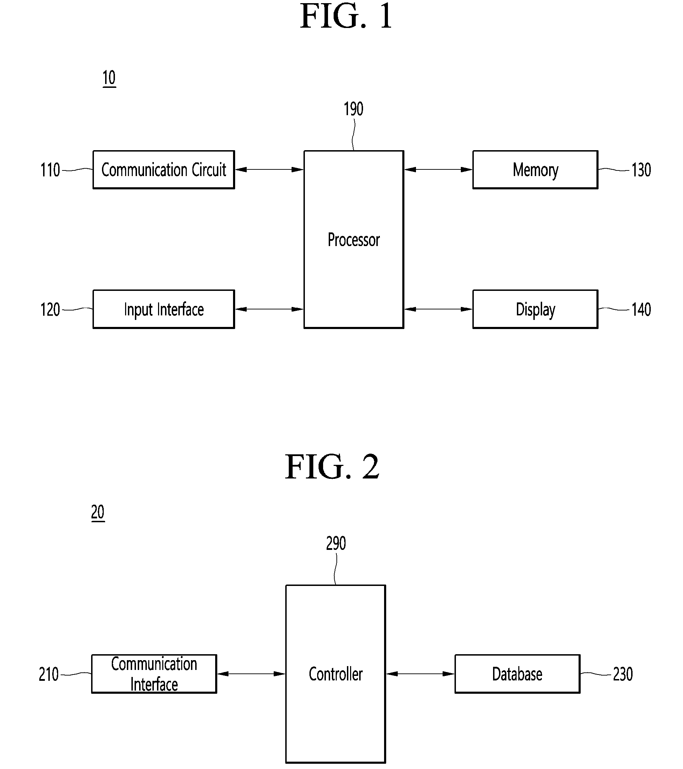

FIG. 1 is a block diagram illustrating the configuration of a user device according to an embodiment of the present disclosure.

The user device 10 may be implemented as a fixed device or a mobile device, such as a projector, a mobile phone, a smartphone, a desktop computer, a notebook, a digital broadcasting terminal, a personal digital assistant (PDA), a portable multimedia player (PMP), a navigation device, a tablet PC, a wearable device, a settop box (STB), a DMB receiver, a radio, a desktop computer, or a TV.

Referring to FIG. 1, the user device 10 may include a communication circuit 110, an input interface 120, a memory 130, a display 140, and a processor 190.

The communication circuit 110 may transmit and receive data with external devices such as other user devices or servers using wired/wireless communication technology.

The communication circuit 110 may perform communication using any one of the following communication standards: Global System for Mobile communication (GSM), Code Division Multi Access (CDMA), Long Term Evolution (LTE), 5G, Wireless LAN (WLAN), Wireless-Fidelity (WiFi), Bluetooth™, Radio Frequency Identification (RFID), Infrared Data Association (IrDA), ZigBee, and Near Field Communication (NFC).

The input interface 120 may include a camera for inputting video signals, a microphone for receiving audio signals, a user input unit for receiving information from a user, and the like.

Here, the camera or microphone may be treated as a sensor, and signals obtained from the camera or microphone may be referred to as sensing data or sensor information.

The memory 130 may store various software and data related to the operation of the user device 10.

The display 140 may display video signals received from the outside.

The processor 190 may control overall operations of the user device 10.

When linkage with an external device is required to perform operations of the user device 10, the processor 190 may generate a control signal for controlling the corresponding external device and transmit the generated control signal to the corresponding external device.

The processor 190 may control at least some of the components of the user device 10 to drive an application program stored in the memory 130.

The processor 190 may operate by combining two or more of the components included in the user device 10 to drive the application program.

FIG. 2 is a block diagram for explaining the configuration of a blockchain node according to an embodiment of the present disclosure.

The blockchain node 20 is a component of a blockchain network and may verify transactions and record them on the verified blockchain network.

The blockchain network may include a plurality of blockchain nodes.

The blockchain node 20 may be a user device 10 such as a server or an edge device.

Referring to FIG. 2, the blockchain node 20 may include a communication interface 210, a database 230, and a controller 290.

The communication interface 210 may perform Internet communication with the user device 10 or an update request device 30.

The database 230 may store data received from the user device 10 or the update request device 30.

The communication interface 210 may include a communication circuit for Internet communication.

The controller 290 may control overall operations of the blockchain node 20.

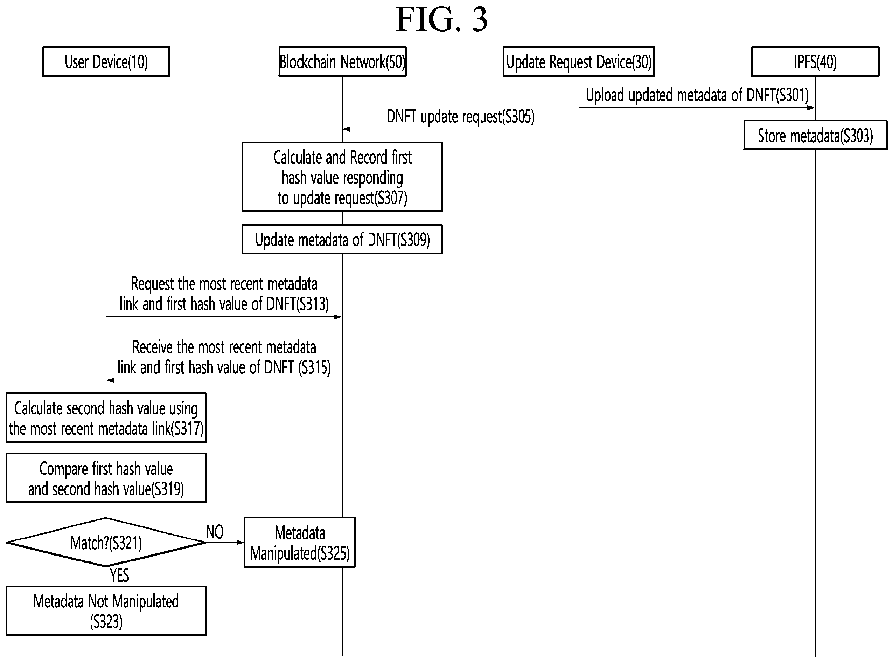

FIG. 3 is a ladder diagram for explaining an operating method of a blockchain system according to an embodiment of the present disclosure.

Referring to FIG. 3, the blockchain system may include a user device 10, a blockchain network 50, an update request device 30, and an InterPlanetary File System (IPFS) 40.

The update request device 30 may include the same components as the user device 10.

The blockchain network 50 may include one or more blockchain nodes.

The update request device 30 generates updated metadata of a DNFT and uploads the generated metadata to the IPFS 40 (S301).

The IPFS 40 may be a system that stores files distributed across a plurality of nodes.

The IPFS 40 stores the uploaded metadata of the DNFT in distributed nodes (S303).

The IPFS 40 may divide the uploaded metadata of the DNFT into data blocks and store each of the data blocks in distributed nodes.

The update request device 30 transmits an update request for updating the metadata of the DNFT to the blockchain network 50 (S305).

The update request device 30 may transmit an update request to the blockchain network 50 so that the metadata of the DNFT uploaded to the IPFS 40 is updated on the blockchain network 50.

The blockchain network 50, in response to the update request, calculates a first hash value based on a previous metadata link and writes the first hash value to a first contract (S307).

The blockchain network 50 may calculate the first hash value using a previous hash value and a previous metadata link (a link before the metadata was changed).

For example, the blockchain network 50 may generate the first hash value by combining the previous hash value and the previous metadata link.

The blockchain network 50 may calculate a cumulative hash value of the metadata links of the existing DNFT and obtain the calculated cumulative hash value as the first hash value.

The blockchain network 50 may calculate the cumulative hash value through the following [Equation 1].

## [Equation 1]

$$S_N = Hash(S_{N-1} \cdot Metadata\_URI_{N-1})$$

The $\cdot$ operator may be an operator representing a string attach combination.

Hash represents a hash function and may be a function following Secure Hash Algorithm-256 (SHA-256)

SHA-256 may be a cryptographic hash algorithm that generates an abbreviated message of 256 bits from a message of arbitrary length.

$S_N$ may be a value stored in the contract when the metadata of the DNFT is changed for the Nth time.

The contract may be a smart contract in which code is automatically executed when specific contract conditions are met in the blockchain network 50, thereby executing the contract content.

A contract address may be generated through the blockchain network 50 according to the occurrence of a contract.

$Metadata\_URI_{N-1}$ may be a link indicating the storage address of the pre-change metadata when the metadata is changed for the Nth time. The metadata link may indicate the address of the IPFS where the metadata of the DNFT is stored.

In one embodiment, the first hash value (S1) may be null.

In another embodiment, the first hash value (S1) may be the address of a private wallet of the user device 10.

In another embodiment, the first hash value (S1) may be a contract address generated at the time of issuance of the DNFT.

The blockchain network 50 may record the cumulative hash value of the metadata links before the metadata update request in a variable included in the contract.

The blockchain network 50 may record the cumulative hash value at the contract address.

Thereafter, the blockchain network 50 updates the DNFT using the update information received from the update request device 30 (S309).

The processor 190 of the user device 10 may request the most recent metadata link (N-1th metadata link) and the first hash value of the DNFT from the blockchain network 50 through the communication circuit 110 (S313).

The processor 190 of the user device 10 may receive the most recent metadata link (N-1th metadata link) and the first hash value of the DNFT from the blockchain network 50 in response to the request (S315).

The processor 190 may read the most recent metadata link of the DNFT and the first hash value representing the cumulative hash value from the blockchain network 50.

A Decentralized Application (Dapp) may be installed on the user device 10.

The processor 190 may execute the decentralized application to perform step S315 and subsequent steps.

The decentralized application may be an application program operating on the blockchain network 50.

The processor 190 of the user device 10 may calculate a second hash value using the received most recent metadata link (S317).

In one embodiment, the processor 190 may calculate the second hash value using the most recent metadata link (N-1th metadata link) and the N-1th hash value.

That is, the processor 190 may calculate the second hash value representing the cumulative hash value through [Equation 2].

## [Equation 2]

$$S_N' = Hash(S_{N-1}' \cdot Metadata\_URI_{N-1})$$

The $\cdot$ operator may be an operator representing a string attach combination.

Hash may be a hash function following Secure Hash Algorithm-256 (SHA-256).

$S_N'$ may be the Nth cumulative hash value.

$Metadata\_URI_{N-1}$ may be a link indicating the storage address of the pre-change metadata.

In one embodiment, the first hash value ($S_1'$) may be null.

In another embodiment, the first hash value ($S_1'$) may be the address of a private wallet of the user device 10.

In another embodiment, the first hash value ($S_1'$) may be a contract address generated at the time of issuance of the DNFT.

The processor 190 of the user device 10 compares the first hash value and the second hash value (S319), and as a result of the comparison, may determine whether the first hash value and the second hash value match (S321).

When the first hash value and the second hash value match, the processor 190 of the user device 10 may determine that the metadata of the DNFT has not been manipulated (S323).

When the first hash value and the second hash value match, the processor 190 may output a first notification indicating that the metadata of the DNFT has not been manipulated.

As an example, when the first hash value and the second hash value match, the processor 190 may display a first notification indicating that the metadata of the DNFT has not been manipulated on the display 140.

When the first hash value and the second hash value do not match, the processor 190 of the user device 10 may determine that the metadata of the DNFT has been manipulated (S325).

When the first hash value and the second hash value do not match, the processor 190 may output a second notification indicating that the metadata of the DNFT has been manipulated.

As an example, when the first hash value and the second hash value do not match, the processor 190 may display a second notification indicating that the metadata of the DNFT has been manipulated on the display 140.

As such, according to an embodiment of the present disclosure, the change history of a DNFT can be tracked and the integrity of the change history of the DNFT can be verified using only the metadata of the DNFT, without querying on a block explorer or blockchain.

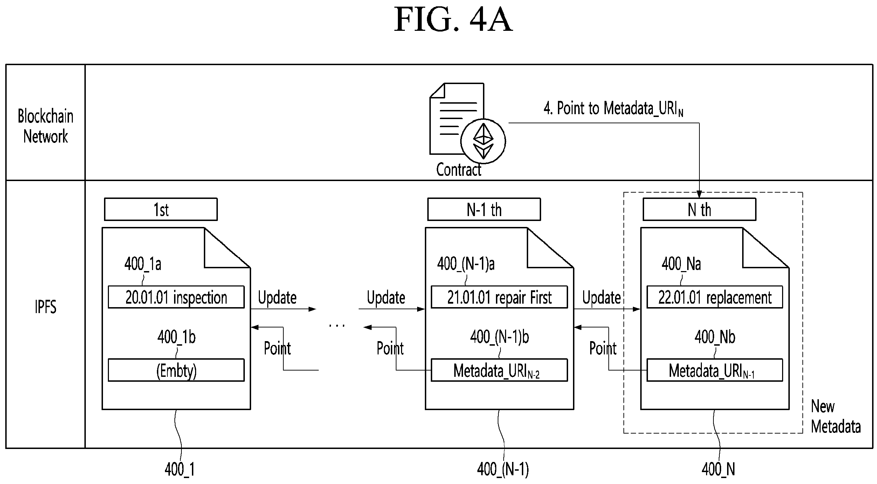

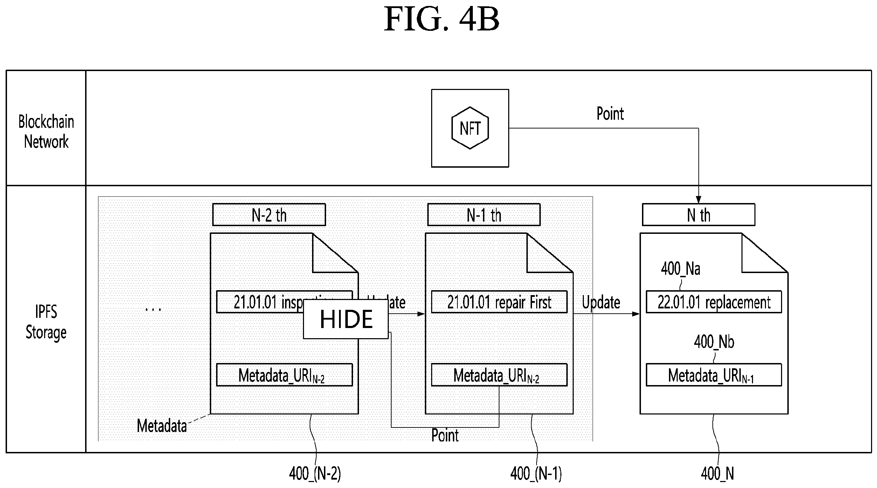

FIG. 4a is a diagram showing a change process of unmanipulated metadata of a DNFT, and FIGS. 4b to 4d are diagrams showing examples in which metadata of a DNFT has been manipulated.

Hereinafter, it is assumed that the DNFT is an NFT issued for the purpose of proving ownership of a home appliance.

Referring to FIG. 4a, the metadata of the DNFT may include additional information of the DNFT and a metadata link indicating the storage address of the metadata.

The metadata of the DNFT may be stored in the IPFS 40.

The DNFT may be issued by a smart contract generated in the blockchain network 50. The blockchain platform used by the blockchain network 50 may be Ethereum, but this is merely an example.

The additional information of the DNFT may include one or more of a name of the DNFT, issuance information, owner information, attribute information, and history information.

The metadata link may indicate the address where the metadata before the change is stored.

Referring to FIG. 4a, the first metadata 400_1 of the DNFT may include first additional information 400_1a and a first metadata link 400_1b.

The first additional information 400_1a may include a management event of the home appliance and a date on which the management event occurred.

The management event may represent any one event among inspection, repair, and replacement of parts of the home appliance.

The first metadata link 400_1b may be recorded as empty because the DNFT has not been updated before.

The Nth metadata 400_N of the DNFT may include Nth additional information 400_Na and an Nth metadata link 400_Nb.

The Nth additional information 400_Na may include a management event of the home appliance and a date on which the management event occurred.

The management event may represent any one event among inspection, repair, and replacement of parts of the home appliance.

The Nth metadata link 400_Nb may include the storage address of the N-1th updated metadata.

FIG. 4b shows a case where the updater updates the metadata by recording the pre-change metadata link as <empty> to hide manipulation of the metadata.

The updater may be a user of the update request device 30.

Referring to FIG. 4b, it is shown that the Nth metadata link 400Nb included in the Nth metadata 400_N is recorded as <empty> by the updater.

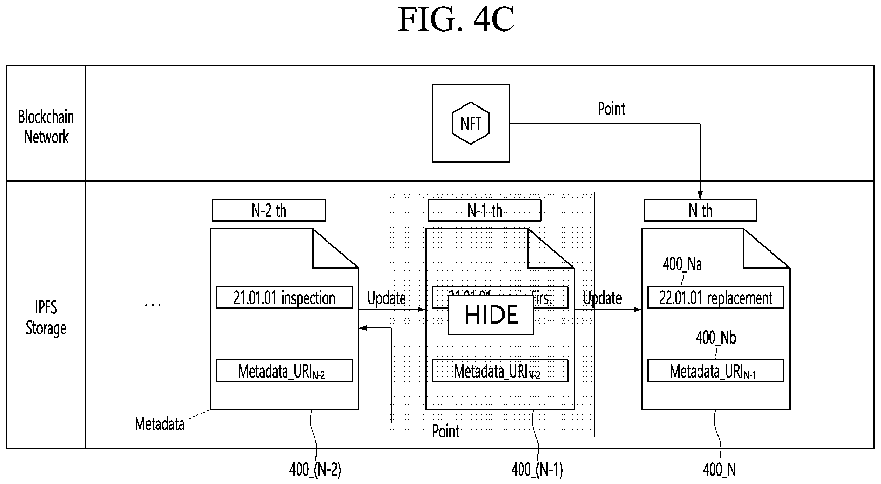

FIG. 4c shows a case where the updater updates the metadata by recording the pre-change metadata link as an address that skips several links to hide manipulation of the metadata.

Referring to FIG. 4c, it is shown that the Nth metadata link 400Nb included in the Nth metadata 400_N is recorded to indicate the N-2th metadata 400_(N-2), skipping the previously updated N-1th metadata 400_(N-1), by the updater.

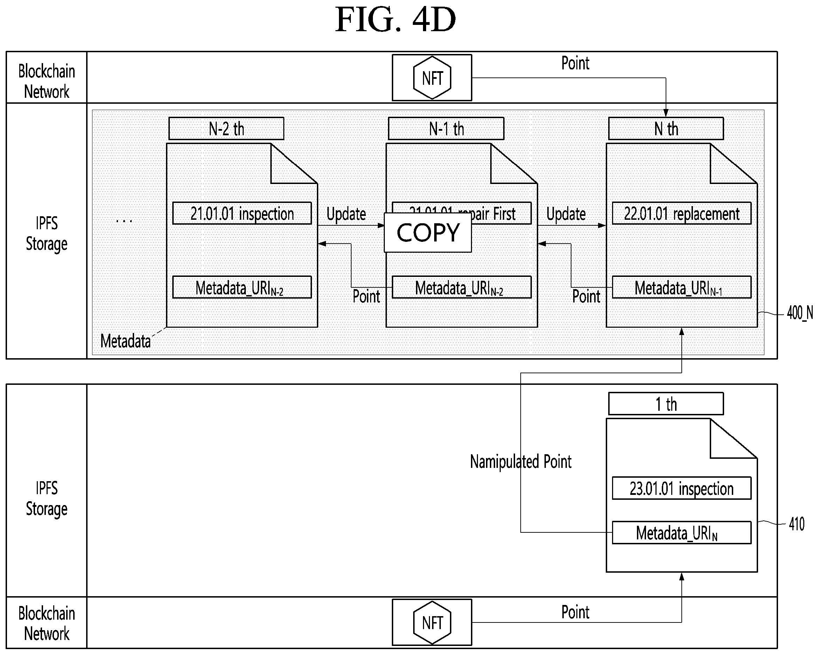

FIG. 4d shows a case where the updater updates metadata 410 by setting the link of the pre-change metadata to the link of metadata 400_N of another DNFT in order to add the metadata change history of another DNFT as their own change history.

The user device 10 according to an embodiment of the present disclosure may determine whether the change history of metadata has been manipulated as shown in FIGS. 4b to 4d through the embodiment of FIG. 3.

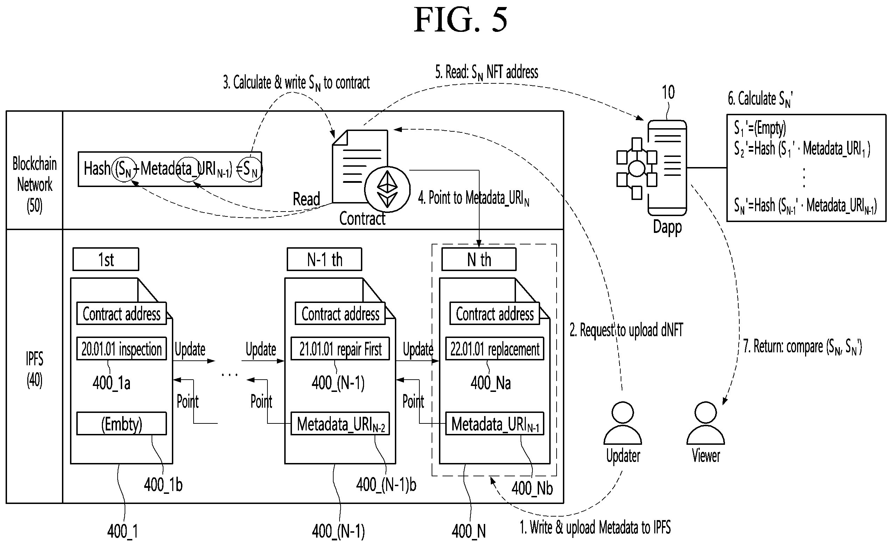

FIG. 5 is a diagram explaining an actual example in which a viewer of a user device verifies the integrity of metadata of a DNFT according to an embodiment of the present disclosure.

1. The updater records and uploads the metadata 400_N of the DNFT to the IPFS 40.

2. The updater transmits an update request to the blockchain network 50 to update the metadata 400_N of the DNFT on the blockchain network 50.

3. The blockchain network 50, in response to the update request, may calculate the first hash value (cumulative hash value) through the following [Equation 1] and record the calculated first hash value (cumulative hash value) in the contract.

[Equation 1]

$$S_N = Hash(S_{N-1} \cdot Metadata\_URI_{N-1})$$

4. The blockchain network 50 may update the metadata of the DNFT from the N-1th metadata 400-(N-1) to the Nth metadata 400_N.

5. The user device 10 used by the viewer may read the first hash value (cumulative hash value) and the N-1th metadata link 400_Nb indicating the address where the metadata 400-(N-1) of the previous DNFT is stored through the installed Dapp.

6. The user device 10 may calculate the second hash value using the N-1th metadata link 400_Nb.

7. The user device 10 may return the comparison result between the first hash value and the second hash value.

The viewer may determine that the metadata of the DNFT has been manipulated when the first hash value and the second hash value are different through the comparison result.

As such, according to an embodiment of the present disclosure, the change history of a DNFT can be tracked and the integrity of the change history of the DNFT can be verified using only the metadata of the DNFT, without querying on a block explorer or blockchain.

According to an embodiment of the present disclosure, the above-described method can be implemented as processor-readable code on a medium on which a program is recorded.

Examples of the processor-readable medium include ROM, RAM, CD-ROM, magnetic tape, floppy disk, optical data storage device, and the like.

**Claims**

1.  A user device comprising:

    a communication circuit configured to communicate with a blockchain network; and
    a processor configured to receive, from the blockchain network, a link of pre-change metadata of a Dynamic Non-Fungible Token (DNFT) and a previous hash value, and a first hash value calculated based on the link of the pre-change metadata, calculate a second hash value using the link of the pre-change metadata, compare the first hash value and the second hash value, and determine whether the metadata of the DNFT has been manipulated according to a comparison result.

2.  The user device of claim 1,
    wherein the processor is configured to:

    determine that the metadata of the DNFT has been manipulated when the first hash value and the second hash value are not identical, and
    determine that the metadata of the DNFT has not been manipulated when the first hash value and the second hash value are identical.

3.  The user device of claim 1,
    wherein the processor is configured to:

    output a first notification indicating that the metadata of the DNFT has been manipulated when the first hash value and the second hash value are not identical, and
    output a second notification indicating that the metadata of the DNFT has not been manipulated when the first hash value and the second hash value are identical.

4.  The user device of claim 1,

    wherein the processor is configured to calculate the second hash value through the following [Equation 1]:

[Equation 1]

$$S_N' = Hash(S_{N-1}' \cdot Metadata\_URI_{N-1})$$

wherein the $\cdot$ operator is an operator representing a string attach combination, Hash is a hash function following Secure Hash Algorithm-256 (SHA-256), $S_N'$ is an Nth cumulative hash value, and $Metadata\_URI_{N-1}$ is a link indicating a storage address of the pre-change metadata.

5. The user device of claim 1,
wherein the processor is configured to request the link of the pre-change metadata and the first hash value of the DNFT from the blockchain network.

6. The user device of claim 5,
wherein the processor is configured to request the link of the pre-change metadata and the first hash value of the DNFT from the blockchain network through a decentralized application installed on the user device.

7. The user device of claim 1,
wherein the metadata of the DNFT includes additional information of the DNFT and the link of the pre-change metadata.

8. An operating method of a user device, comprising:

receiving, from a blockchain network, a link of pre-change metadata of a Dynamic Non-Fungible Token (DNFT) and a previous hash value, and a first hash value calculated based on the link of the pre-change metadata;
calculating a second hash value using the link of the pre-change metadata;
comparing the first hash value and the second hash value; and
determining whether the metadata of the DNFT has been manipulated according to a comparison result.

9. The operating method of claim 8,
wherein the determining comprises:

determining that the metadata of the DNFT has been manipulated when the first hash value and the second hash value are not identical; and
determining that the metadata of the DNFT has not been manipulated when the first hash value and the second hash value are identical.

10. The operating method of claim 8,
further comprising: outputting a first notification indicating that the metadata of the DNFT has been manipulated when the first hash value and the second hash value are not identical; and outputting a second notification indicating that the metadata of the DNFT has not been manipulated when the first hash value and the second hash value are identical.

11. The operating method of claim 8,
wherein the calculating the second hash value comprises:

calculating the second hash value through the following [Equation 1]:

[Equation 1]

$$S_N' = Hash(S_{N-1}' \cdot Metadata\_URI_{N-1})$$

wherein the $\cdot$ operator is an operator representing a string attach combination, Hash is a hash function following Secure Hash Algorithm-256 (SHA-256), $S_N'$ is an Nth cumulative hash value, and $Metadata\_URI_{N-1}$ is a link indicating a storage address of the pre-change metadata.

12. The operating method of claim 8,
further comprising: requesting the link of the pre-change metadata and the first hash value of the DNFT from the blockchain network.

13. The operating method of claim 12,
wherein the requesting comprises: requesting the link of the pre-change metadata and the first hash value of the DNFT from the blockchain network through a decentralized application installed on the user device.

**14.** The operating method of claim 8,
wherein the metadata of the DNFT includes additional information of the DNFT and the link of the pre-change metadata.

# FIG. 1

10

190

110 — Communication Circuit

Processor

130 — Memory

120 — Input Interface

140 — Display

# FIG. 2

20

290

210 — Communication Interface

Controller

230 — Database

# FIG. 3

| User Device(10) | Blockchain Network(50) | Update Request Device(30) | IPFS(40) |
|---|---|---|---|

Upload updated metadata of DNFT(S301)

DNFT update request(S305)

Store metadata(S303)

Calculate and Record first
hash value responding
to update request(S307)

Update metadata of DNFT(S309)

Request the most recent metadata
link and first hash value of DNFT(S313)

Receive the most recent metadata
link and first hash value of DNFT (S315)

Calculate second hash value using
the most recent metadata link(S317)

Compare first hash value
and second hash value(S319)

Match?(S321) — NO → Metadata
Manipulated(S325)

YES

Metadata Not Manipulated
(S323)

EP 4 749 993 A1

# FIG. 4A

Blockchain Network

4. Point to Metadata_URI$_N$

Contract

IPFS

| 1st | N-1 th | N th |

400_1a

20.01.01 inspection → Update → ... → Update → 400_(N-1)a

21.01.01 repair First → Update → 400_Na

22.01.01 replacement

400_1b

(Embty)

Point

Point

400_(N-1)b

Metadata_URI$_{N-2}$

Point

400_Nb

Metadata_URI$_{N-1}$

New Metadata

400_1

400_(N-1)

400_N

# FIG. 4B

# FIG. 4C

# FIG. 4D

EP 4 749 993 A1

# FIG. 5

## INTERNATIONAL SEARCH REPORT

| International application No. |
|---|
| **PCT/KR2023/013853** |

**A.    CLASSIFICATION OF SUBJECT MATTER**

**H04L 9/32**(2006.01)i; **H04L 9/00**(2006.01)i

According to International Patent Classification (IPC) or to both national classification and IPC

**B.    FIELDS SEARCHED**

Minimum documentation searched (classification system followed by classification symbols)

H04L 9/32(2006.01); G06Q 20/38(2012.01); H04L 67/1097(2022.01); H04L 67/562(2022.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 블록체인(blockchain), 동적 대체 불가능 토큰(DNFT), 해시 값(hash value), 메타데이터(metadata), 링크(link), 조작(fake)

**C.    DOCUMENTS CONSIDERED TO BE RELEVANT**

| Category* | Citation of document, with indication, where appropriate, of the relevant passages | Relevant to claim No. |
|---|---|---|
| Y<br>A | SHAH, Kaushal et al. Smart Contract-based Dynamic Non-Fungible Tokens Generation System. Research Square. Retrieved from DOI: https://doi.org/10.21203/rs.3.rs-2796956/v1. pp. 1-18. 13 April 2023.<br>    See abstract and pages 3-6. | 1-3,5-10,12-14<br>4,11 |
| Y | Al-TOWHI, Khalil. The ideal use of NFT in Metaverse - A Systematic literature review. Department of Computer And System Sciences, Stockholm University. pp. 1-37, 26 July 2023.<br>    [Retrieved on 26 March 2024]. Retrieved from <https://su.diva-portal.org/smash/get/diva2: 1784463/FULLTEXT01.pdf>.<br>    See pages 24-27. | 1-3,5-10,12-14 |
| A | XU, Man. How to store NFT metadata decentralized and dynamically. Medium. 08 December 2022.<br>    [Retrieved on 26 March 2024]. Retrieved from <https://medium.com/geekculture/storage-of-dynamic-nft-metadata-based-on-db3-network-f39bd1fe2a77>.<br>    See pages 1-8. | 1-14 |
| A | KR 10-2530967 B1 (HEXLANT) 15 May 2023 (2023-05-15)<br>    See paragraphs [0073]-[0090] and figures 3-4. | 1-14 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 May 2024** | **21 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/013853** |

### C. DOCUMENTS CONSIDERED TO BE RELEVANT

| Category* | Citation of document, with indication, where appropriate, of the relevant passages | Relevant to claim No. |
| --- | --- | --- |
| A | US 2022-0391895 A1 (DIA ASSOCIATION) 08 December 2022 (2022-12-08) See paragraphs [0003]-[0005] and [0042]-[0046] and figures 1-2. | 1-14 |

Form PCT/ISA/210 (second sheet) (July 2022)

**INTERNATIONAL SEARCH REPORT**
Information on patent family members

International application No.

**PCT/KR2023/013853**

| Patent document cited in search report | Publication date (day/month/year) | Patent family member(s) | Publication date (day/month/year) |
|---|---|---|---|
| KR 10-2530967 B1 | 15 May 2023 | None | |
| US 2022-0391895 A1 | 08 December 2022 | EP 4102386 A1 | 14 December 2022 |
| | | US 11636469 B2 | 25 April 2023 |

Form PCT/ISA/210 (patent family annex) (July 2022)